# EUROPEAN PATENT APPLICATION

(11) **EP 4 641 747 A1**
(43) Date of publication of application: **29.10.2025**
(21) Application number: 24891840.1
(22) Date of filing: 11.10.2024
(51) Int. Cl.: H01M 10/0587, H01M 50/533, H01M 10/052

(54) **ELECTRODE ASSEMBLY AND SECONDARY BATTERY COMPRISING SAME**

(30) Priority: 14.11.2023 KR 20230157262
(71) Applicant: LG Energy Solution, Ltd., Seoul 07335 (KR)
(72) Inventor: LEE, Soono, Daejeon 34122 (KR); CHOI, Kyuhyun, Daejeon 34122 (KR); CHUNG, Changkwon, Daejeon 34122 (KR); LEE, Wonjoon, Daejeon 34122 (KR); JEONG, Jaewon, Daejeon 34122 (KR); PARK, Sungho, Daejeon 34122 (KR)
(74) Representative: Goddar, Heinz J.
(86) International application number: PCT/KR2024/096331
(87) International publication number: WO 2025/105894

(57) **Abstract**

An electrode assembly according to an embodiment of the present disclosure comprises: a first electrode; a second electrode; and a separator interposed between the first electrode and the second electrode. The first electrode, the second electrode, and the separator are wound together to form a jelly roll structure. The first electrode includes a first electrode current collector and a first active material part formed by applying an electrode active material to one side or both sides of the first electrode current collector. The second electrode includes a second electrode current collector and a second active material part formed by applying an electrode active material to one side or both sides of the second electrode current collector. A first exposed part to which the electrode active material is not applied in the first electrode current collector extends in a first direction, and a second exposed part to which the electrode active material is not applied in the second electrode current collector extends in a second direction opposite to the first direction. The first exposed part and the second exposed part have a bending point for each winding turn. The length from the end of the first electrode current collector in the second direction to the bending point of the first exposed part gradually increases for each winding turn along the radial direction of the jelly roll structure. The radial direction is a direction directed from a core part to an outer part of the jelly roll structure.

## Description

### [TECHNICAL FIELD]

### Cross-Reference to Related Application(s)

This application claims priority to and the benefit of Korean Patent Application No. 10-2023-0157262, filed on November 14, 2023, with the Korean Intellectual Property Office, the disclosure of which is incorporated herein by reference in its entirety.

The present disclosure relates to an electrode assembly and a secondary battery including the same, and more particularly, to an electrode assembly in the form of a jelly roll and a secondary battery including the same.

### [BACKGROUND]

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources.

Such a secondary battery is widely used as a novel energy source for enhancing environment friendliness and energy efficiency, in that it has a primary advantage of remarkable reducing the use of fossil fuels, and also generates no by-products from the use of energy.

Secondary batteries widely used at present include lithium ion batteries, lithium polymer batteries, nickel cadmium batteries, nickel hydrogen batteries, nickel zinc batteries, and the like. An operating voltage of the unit secondary battery cell is about 2.5V to 4.5V. Therefore, when an output voltage higher than the operating voltage is required, a plurality of battery cells, namely battery cells, may be connected in series to configure a battery pack. In addition, depending on the charge/discharge capacity required for the battery module or battery pack, a plurality of battery cells may also be connected in parallel. Thus, the number of battery cells included in the battery module or battery pack and the electrical connection type may be variously set in accordance with the required output voltage or charge/discharge capacity.

The electrode assembly built into a battery cell is a power generation element capable of charging/discharging and including a stacked structure of a positive electrode, a negative electrode and a separator. The electrode assembly is classified into a jelly-roll type, a stacked type and a stack/folding type. The jelly-roll type is shape in which a long-sheet positive electrode and a long-sheet negative electrode, each of which is applied with an active material, is wound with a separator interposed between them, the stacked type is a shape in which a plurality of positive electrodes and a plurality of negative electrodes each having a predetermined size are sequentially stacked in a state where a separator is interposed therebetween, and a stack/folding type is a combination of a jelly-roll type and a stack type. Among them, the jelly-roll type electrode assembly has an advantage that manufacture is easy and the energy density per weight is high.

Depending on a shape of a battery case, a secondary battery, namely, a battery cell, may be classified into a cylindrical battery where an electrode assembly is built into a cylindrical battery can, a prismatic battery where an electrode assembly is built into a prismatic battery can, or a pouch-type battery where an electrode assembly is built into a pouch-shaped case made of an aluminum laminate sheet. Among them, the cylindrical battery has an advantage that it has a relatively large capacity and is structurally stable.

In the case of a cylindrical battery cell, a separator serving as an insulator is interposed between a positive electrode and a negative electrode, and they are wound to form an electrode assembly in the form of a jelly roll, which is inserted into a battery can to configure a battery. Further, a strip-shaped electrode tab may be connected to an uncoated part of each of the positive electrode and the negative electrode, and the electrode tab electrically connects between the electrode assembly and an electrode terminal that is exposed to the outside. For reference, a positive electrode terminal is a cap assembly of a sealing body that seals the open upper part of a battery can, and a negative electrode terminal is a battery can itself. However, according to the conventional cylindrical battery having such a structure, since current is concentrated in the strip-shaped electrode tab coupled to the uncoated part of the positive electrode or the uncoated part of the negative electrode, which causes problems that the current collection efficiency is not good due to large resistance and large heat generation.

For small-sized cylindrical batteries having a form factor 1865 (diameter: 18 mm, height: 65 mm) or a form factor 2170 (diameter: 21 mm, height: 70 mm), resistance and heat generation are not a major issue. However, when the form factor increases to apply the cylindrical battery to an electric vehicle, a lot of heat is generated around the electrode tab during the rapid charging process, which may cause a problem that the cylindrical battery ignites.

To solve this problem, there was suggested a secondary battery (a so-called tab-less cylindrical battery cell) having a structure in which the exposed parts where the positive and negative electrode current collectors are exposed are designed to be disposed at an upper end and a lower end of the jelly-roll type electrode assembly, respectively, and a current collecting plate is welded to such exposed parts to improve the current collecting efficiency.

However, in the jelly-roll type electrode assembly included in such a tab-less secondary battery, the exposed parts can be bent in a direction toward the core part of the jelly-roll electrode assembly in order to join the exposed parts to the current collecting plate. That is, the exposed parts are bent in the direction toward the core part of the jelly-roll electrode assembly, and while these exposed parts are stacked for each winding turn, the exposed parts may be joined to the current collecting plate. However, due to the characteristics of the jelly-roll type electrode assembly, the thickness of the portion where the exposed parts are stacked, i.e., the stacking thickness, increases as it goes toward the core part of the jelly-roll electrode assembly. Thereby, the stacked exposed parts show irregular deformation and become distorted, which can be directly related to a problem of ignition in the secondary battery including the electrode assembly. Specifically, if the separator is damaged due to the irregular deformation of the stacked exposed parts, a short circuit occurs between the positive electrode and negative electrode, which may lead to ignition or explosion of the secondary battery.

Therefore, there is a need for an improvement method that can prevent irregular deformation of the stacked exposed parts in a tab-less secondary battery.

### [DETAILED DESCRIPTION OF THE INVENTION]

### [Technical Problem]

It is an object of the present disclosure to provide an electrode assembly that can prevent irregular deformation from occurring when the exposed parts being bent are stacked in a jelly-roll type electrode assembly in which the exposed part of the electrode current collector functions as a terminal, and a secondary battery including the same.

However, the technical objects to be solved by the embodiments of the present disclosure are not limited to those disclosed above, and may be expanded in various ways within the scope of the technical idea included in the present disclosure.

### [Technical Solution]

An electrode assembly according to an embodiment of the present disclosure comprises: a first electrode; a second electrode; and a separator interposed between the first electrode and the second electrode. The first electrode, the second electrode, and the separator are wound together to form a jelly roll structure. The first electrode includes a first electrode current collector and a first active material part formed by applying an electrode active material to one side or both sides of the first electrode current collector. The second electrode includes a second electrode current collector and a second active material part formed by applying an electrode active material to one side or both sides of the second electrode current collector. A first exposed part to which the electrode active material is not applied in the first electrode current collector extends in a first direction, and a second exposed part to which the electrode active material is not applied in the second electrode current collector extends in a second direction opposite to the first direction. The first exposed part and the second exposed part have a bending point for each winding turn. The length from the end of the first electrode current collector in the second direction to the bending point of the first exposed part gradually increases for each winding turn along a radial direction of the jelly roll structure. The radial direction is a direction directed from a core part to an outer part of the jelly roll structure.

The first exposed part may include a plurality of first segments that are bent independently of one another. The bending point of the first exposed part may be a point at which the first segment is bent.

In the K^{th} winding turn (where K>2) of the jelly roll structure along the radial direction of the jelly roll structure, when the length from the end of the first electrode current collector in the second direction to the bending point of the first exposed part is defined as L1_{K}, L1_{K}-L1_{K-1} may satisfy 50% or more and 300% or less of t1*(N1_{K}*A1_{K})/(2πR1_{K-1}). The t1 is the thickness of the first segment, the N1_{K} is the number of the first segments along the circumferential direction at the K^{th} winding turn, the A1_{K} is the width of the first segment of the K^{th} winding turn placed on the K-1^{th} winding turn, and the R1_{K-1} is the radius at a K-1ₜₕ winding turn.

The first segment may have a square shape.

The A1_{K} may be calculated as W1_{K}, which is the width of the connecting end of the first segment.

The first segment may have a trapezoidal shape.

The A1_{K} may be calculated as W1_{K}-2*(D1_{K}/tanθ1). The W1_{K} is the width of the connecting end of the first segment, the D1_{K} is the interval between the K^{th} winding turn and the K-1^{th} winding turn, and the θ1 is the inner angle of the connecting end of the first segment having a trapezoidal shape.

The length from the end of the second electrode current collector in the first direction to the bending point of the second exposed part may gradually increase for each winding turn along the radial direction of the jelly roll structure.

The second exposed part may include a plurality of second segments that are bent independently of one another. The bending point of the second exposed part may be a point at which the second segment is bent.

In the K^{th} winding turn (where K>2) of the jelly roll structure along the radial direction of the jelly roll structure, when the length from the end of the second electrode current collector in the first direction to the bending point of the second exposed part is defined as L2_{K}, L2_{K}-L2_{K-1} may satisfy 50% or more and 300% or less of t2*(N2_{K}*A2_{K})/(2πR2_{K-1}). The t2 is the thickness of the second segment, the N2_{K} is the number of the second segments along the circumferential direction at the K^{th} winding turn, the A2_{K} is the width of the second segment of the K^{th} winding turn placed on the K-1^{th} winding turn, and the R2_{K-1} is the radius at the K-1^{th} winding turn.

The second segment may have a square shape.

The A2_{K} may be calculated as W2_{K}, which is the width of the connecting end of the second segment.

The second segment may have a trapezoidal shape.

The A2_{K} may be calculated as W2_{K}-2*(D2_{K}/tanθ2). The W2_{K} is the width of the connecting end of the second segment, the D2_{K} is the interval between the K^{th} winding turn and the K-1^{th} winding turn, and the 02 is the inner angle of the connecting end of the second segment having a trapezoidal shape.

A secondary battery according to an embodiment of the present disclosure comprises the electrode assembly.

### [Advantageous Effects]

According to embodiments of the present disclosure, in a jelly-roll type electrode assembly in which the exposed part of the electrode current collector functions as a terminal, the positions of the bending points for each winding turn of the exposed parts may be set to be different in the radial direction, thereby preventing the occurrence of irregular deformation in the stacked exposed parts. Thereby, it is possible to prevent a short circuit between the positive and negative electrodes, and also to prevent the occurrence of ignition or explosion caused thereby.

The effects of the present disclosure are not limited to those described above, and other effects that are not described herein may clearly be understood by one of ordinary skill in the art from the appended claims.

### [BRIEF DESCRIPTION OF THE DRAWINGS]

FIG. 1 is a diagram showing a state before an electrode assembly according to an embodiment of the present disclosure is wound.
FIG. 2 is a diagram showing a state where an electrode assembly according to an embodiment of the present disclosure is wound.
FIG. 3 is a drawing showing a state where winding of an electrode assembly according to an embodiment of the present disclosure is completed.
FIG. 4 is a plan view of the electrode assembly of FIG. 3 as viewed from above.
FIG. 5 is a cross-sectional view showing a cross section taken along the cutting line A-A' of FIG. 4.
FIG. 6 is a cross-sectional view showing a cross section of an electrode assembly according to a comparative example of the present disclosure.
FIG. 7 is a schematic diagram showing a state where a first segment in a specific winding turn is placed on the previous winding turn in an electrode assembly according to an embodiment of the present disclosure.
FIG. 8 is a partial diagram showing a part of a first electrode according to an embodiment of the present disclosure.
FIG. 9 is a schematic diagram showing only the first electrode in the Kth winding turn.
FIG. 10 is a schematic diagram showing a state where a segment in a specific winding turn is placed on the previous winding turn in an electrode assembly according to a modified embodiment of the present disclosure.
FIG. 11 is a partial diagram showing a part of a first electrode according to a modified embodiment of the present disclosure.
FIG. 12 is a schematic diagram showing a state where a second segment in a specific winding turn is placed on the previous winding turn in an electrode assembly according to an embodiment of the present disclosure.
FIG. 13 is a partial diagram showing a part of a second electrode according to an embodiment of the present disclosure.
FIG. 14 is a schematic diagram showing a state where a segment in a specific winding turn is placed on the previous winding turn in an electrode assembly according to a modified embodiment of the present disclosure.
FIG. 15 is a partial diagram showing a part of a second electrode according to a modified embodiment of the present disclosure.
FIG. 16 is a cross-sectional view of a secondary battery including an electrode assembly according to an embodiment of the present disclosure.
FIG. 17 is a diagram for explaining a method of bending a first segment of a first electrode according to an embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be embodied in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

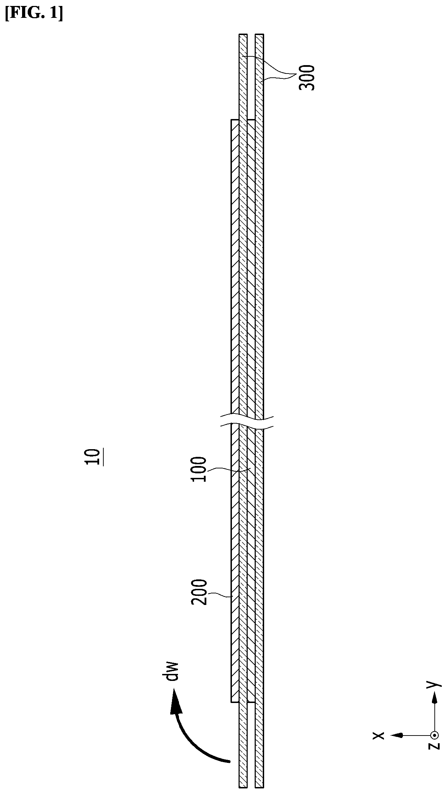

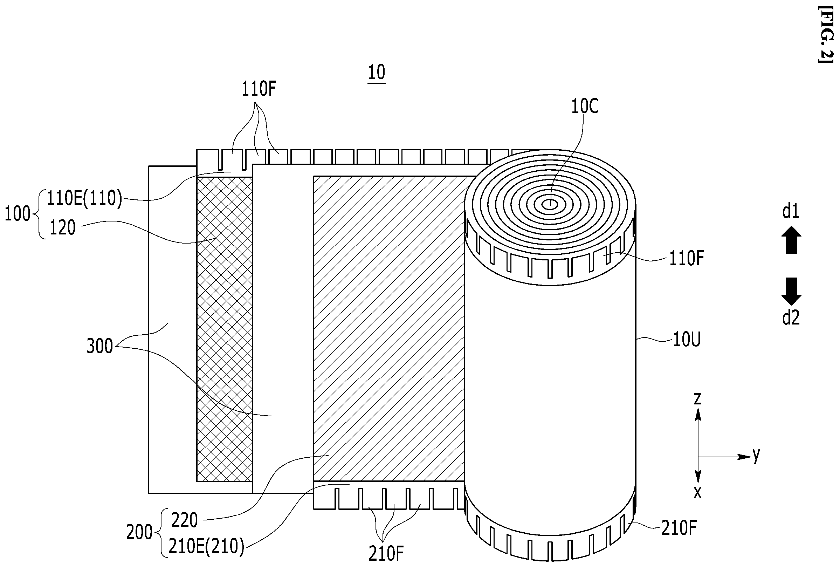

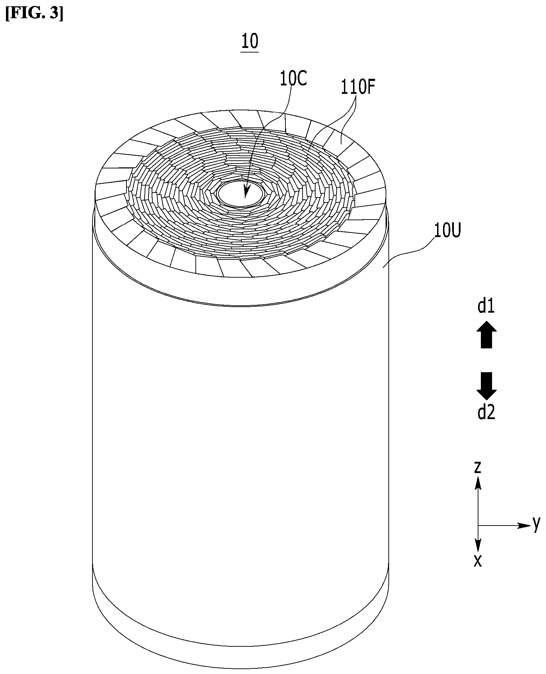

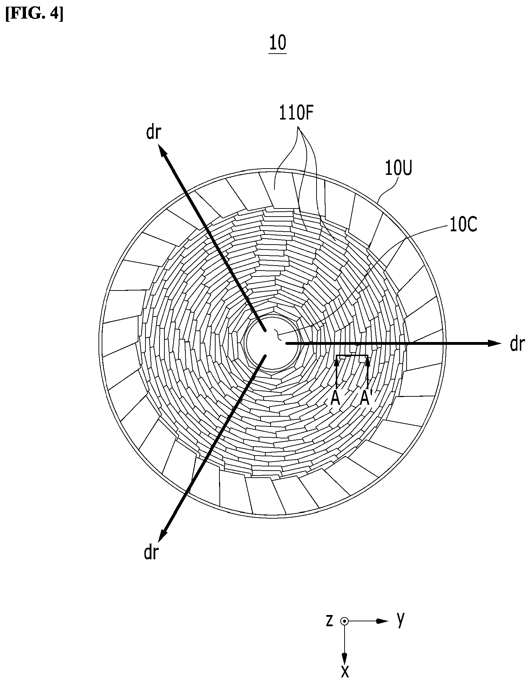

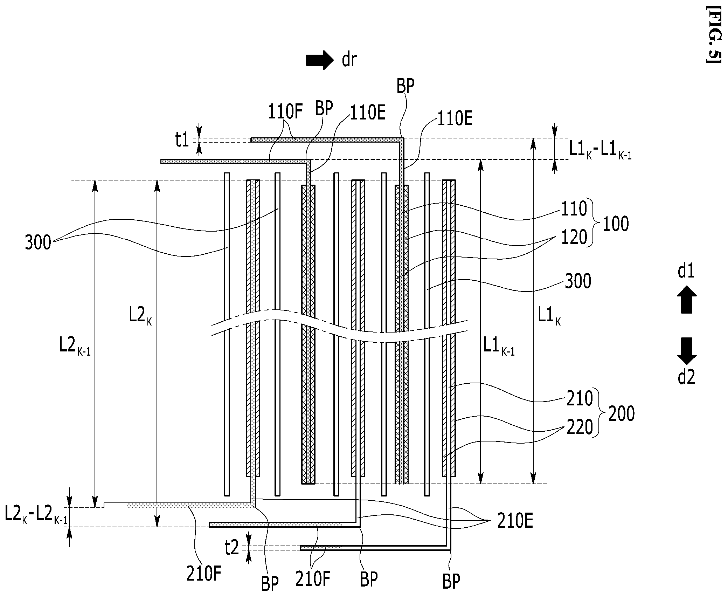

FIG. 1 is a diagram showing a state before an electrode assembly according to an embodiment of the present disclosure is wound. FIG. 2 is a diagram showing a state where an electrode assembly according to an embodiment of the present disclosure is wound. FIG. 3 is a drawing showing a state where winding of an electrode assembly according to an embodiment of the present disclosure is completed. FIG. 4 is a plan view of the electrode assembly of FIG. 3 as viewed from above. FIG. 5 is a cross-sectional view showing a cross section taken along the cutting line A-A' of FIG. 4.

Referring to FIGS. 1 to 5, an electrode assembly 10 according to an embodiment of the present disclosure includes a first electrode 100, a second electrode 200, and a separator 300 interposed between the first electrode 100 and the second electrode 200. Also, the first electrode 100, the second electrode 200, and the separator 300 are wound together to form a jelly roll structure. That is, the electrode assembly 10 according to the present embodiment is an electrode assembly in the form of a jelly roll. In addition, in order to prevent the first electrode 100 and the second electrode 200 from coming into contact with each other when wound in the form of a jelly roll, a separator 300 may be further disposed on the outside of the first electrode 100 or the second electrode 200, as shown in FIG. 1. That is, the electrode assembly 10 may include two or more separators 300. As an example, as shown in FIG. 1, the electrode assembly 10 according to the present embodiment can be manufactured by winding the second electrode 200, one separator 300, the first electrode 100, and the other separator 300 along the winding direction dw in a stacked state.

The first electrode 100 includes a first electrode current collector 110, and a first active material part 120 formed by applying an electrode active material to one side or both sides of the first electrode current collector 110. Also, a first exposed part 110E to which the electrode active material is not applied in the first electrode current collector 110 extends in a first direction d1. Specifically, the part to which the electrode active material is not applied in the first electrode current collector 110 and on which the first electrode current collector 110 is exposed may correspond to the first exposed part 110E.

The second electrode 200 includes a second electrode current collector 210, and a second active material part 220 formed by applying an electrode active material to one side or both sides of the second electrode current collector 210. Also, a second exposed part 210E to which the electrode active material is not applied in the second electrode current collector 210 extends in a second direction d2 opposite to the first direction d1. Specifically, the part to which the electrode active material is not applied in the second electrode current collector 210 and on which the second electrode current collector 210 is exposed may correspond to the second exposed part 210E.

The first direction d1 and the second direction d2 are opposite to each other in the axial direction of the electrode assembly 10, wherein the axial direction of the electrode assembly 10 corresponds to the direction in which the central axis of the electrode assembly 10 having the wound cylindrical shape is connected. In FIG. 2, the axial direction of the electrode assembly 10 corresponds to a direction parallel to the z-axis.

As an example, either one of the first electrode 100 and the second electrode 200 may be a positive electrode, and the other may be a negative electrode. That is, either one of the first electrode current collector 110 and the second electrode current collector 210 may be a positive electrode current collector, and the other may be a negative electrode current collector. In addition, either one of the first active material part 120 and the second active material part 220 may be a positive electrode active material part to which a positive electrode active material is applied, and the other may be a negative electrode active material part to which a negative electrode active material is applied.

In the present disclosure, the positive electrode current collector and the negative electrode current collector can be used without limitation as long as they are metal materials known in the art. In addition, the positive electrode active material applied onto the positive electrode and the negative electrode active material applied onto the negative electrode can be used without limitation as long as they are active materials known in the art.

The positive electrode current collector may be a thin metal foil, and may generally have a thickness of 3 to 500 micrometers. The positive electrode current collector is not particularly limited as long as it has high conductivity without causing any chemical changes in a battery, and for example, stainless steel, aluminum, nickel, titanium, fired carbon, or aluminum or stainless steel whose surface is treated with carbon, nickel, titanium, silver, or the like may be used. The positive electrode current collector may have fine protrusions and depressions formed on a surface thereof to enhance adherence of a positive electrode active material. For example, the current collector may be used in various forms such as a film, a sheet, a foil, a net, a porous body, a foaming body, and a non-woven fabric structure.

The positive electrode active material may include an alkali metal compound represented by a general chemical formula A[AₓM_{y}]O_{2+z} (where A includes at least one element of Li, Na and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; and stoichiometric coefficients x, y and z are selected for the compound to maintain electrical neutrality).

In another example, the positive electrode active material may be an alkali metal compound xLiM¹O₂₋(1-x)Li₂M²O₃ (where M¹ includes at least one element having an average oxidation state of 3; M² includes at least one element having an average oxidation state of 4; 0≤x≤1) disclosed in US 6,677,082 and US 6,680,143.

In yet another example, the positive electrode active material may be lithium metal phosphate represented by a general chemical formula LiₐM¹ₓFe₁₋ₓM²_{y}P_{1-y}M³_{z}O_{4-z} (where M¹ includes at least one element selected from Ti, Si, Mn, Co, Fe, V, Cr, Mo,Ni, Nd, Al, Mg and Al; M² includes at least one element selected from Ti, Si, Mn, Co, Fe, V, Cr, Mo, Ni, Nd, Al, Mg, Al, As, Sb, Si, Ge, V and S; M³ includes at least one element selected from halogen group elements including F; 0 < a ≤2, 0 ≤ x ≤ 1, 0 ≤ y < 1, 0 ≤ z < 1; stoichiometric coefficients a, x, y and z are selected for the compound to maintain electrical neutrality), or Li₃M₂(PO₄)₃ [where M includes at least one element selected from Ti, Si, Mn, Fe, Co, V, Cr, Mo, Ni, Al, Mg and Al].

The negative electrode current collector may be a thin metal foil, and may generally have a thickness of 3 to 500 micrometers. The negative electrode current collector is not particularly limited as long as it has high conductivity without causing any chemical changes in a battery, and for example, copper, stainless steel, aluminum, nickel, titanium, fired carbon, or copper or stainless steel whose surface is treated with carbon, nickel, titanium, silver, or the like, an aluminum-cadmium alloy, or the like may be used. Also, similar to the positive electrode current collector, the negative electrode current collector may have fine protrusions and depressions formed on a surface thereof to enhance adherence of a negative electrode active material. The negative electrode current collector may be used in various forms such as a film, a sheet, a foil, a net, a porous body, a foaming body, and a non-woven fabric structure.

The negative electrode active material may be a carbon material, a lithium metal or a lithium metal compound, silicon or a silicon compound, tin or a tin compound, or the like. A metal oxide having a potential of less than 2 V, e.g., TiO₂ or SnO₂, may also be used as a negative electrode active material. The carbon material may be low-crystalline carbon, high-crystalline carbon, or the like.

The separator is interposed between the positive electrode and the negative electrode, and an insulating thin film having a high ion permeability and mechanical strength is used as the separator. The separator typically has a pore diameter of 0.01~10 micrometers and a thickness of 5~300 micrometers. As the separator, sheets or non-woven fabrics formed of an olefin polymer, such as polypropylene, having a chemical resistance and hydrophobicity, glass fibers or polyethylene may be used. In the case where a solid electrolyte such as a polymer is employed as the electrolyte, the solid electrolyte may also serve as the separator.

Meanwhile, in the electrode assembly 10 according to the present embodiment, the first exposed part 110E and the second exposed part 210E have bending points (BP) for each winding turn. As will be described later, the electrode assembly 10 according to the present embodiment has a tab-less structure in which the first exposed part 110E and the second exposed part 210E are directly connected to the current collecting plate, rather than attaching electrode tabs to the electrode current collector, thereby guiding the electrical connection. At this time, in order to join the first exposed part 110E and the second exposed part 210E to the current collecting plate, the first exposed part 110E and the second exposed part 210E can be bent in a direction toward the core part 10C of the electrode assembly 10 of the jelly roll structure. Here, the point where the first exposed part 110E and the second exposed part 210E are bent is referred to as the bending point BP. In addition, the core part 10C of the electrode assembly 10 refers to an empty space formed in the center of the electrode assembly 10 which is a jelly roll structure, as the starting point of winding and the center of the cylindrical electrode assembly 10 when viewed from above. Here, viewing the electrode assembly 10 as a jelly roll structure from above means viewing the electrode assembly 10 along the axial direction, i.e., the z-axis direction or the -z-axis direction, on the xy plane, as shown in FIG. 4.

In this embodiment, the length L1_{K-1}, L1_{K} from the end of the first electrode current collector 110 in the second direction d2 to the bending point BP of the first exposed part 110E gradually increases for each winding turn along the radial direction dr of the jelly roll structure. Here, the radial direction dr of the jelly roll structure means the direction directed from a core part 10C to an outer part 10U of the jelly roll structure. The outer part 10U of the jelly roll structure refers to the outer circumferential part of the jelly roll structure when the electrode assembly 10 as a jelly roll structure is viewed from above. Therefore, the radial direction dr means the direction away from the core part 10C when the electrode assembly 10, which is the jelly roll structure, is viewed from above. Further, the "winding turns" refer to the parts where the first electrode 100 being wound meets a specific radial direction dr. That is, the "bending point BP for each winding turn" refers to the points at which the first exposed part 110E is bent at the parts where the first electrode 100 being wound meets any specific radial direction dr.

That is, in this embodiment, the height of the bending point BP for each winding turn of the first exposed part 110E along the first direction d1 may gradually increase as it goes in the radial direction dr. As mentioned above, since the first exposed part 110E has a bending point BP while being bent in a direction toward the core part 10C, the thickness of the part where the first exposed parts 110E are stacked, i.e., the stacking thickness, increases as the number of turns increases as it goes toward the core part 10C. Here, the direction toward the core part 10C corresponds to a direction opposite to the radial direction dr.

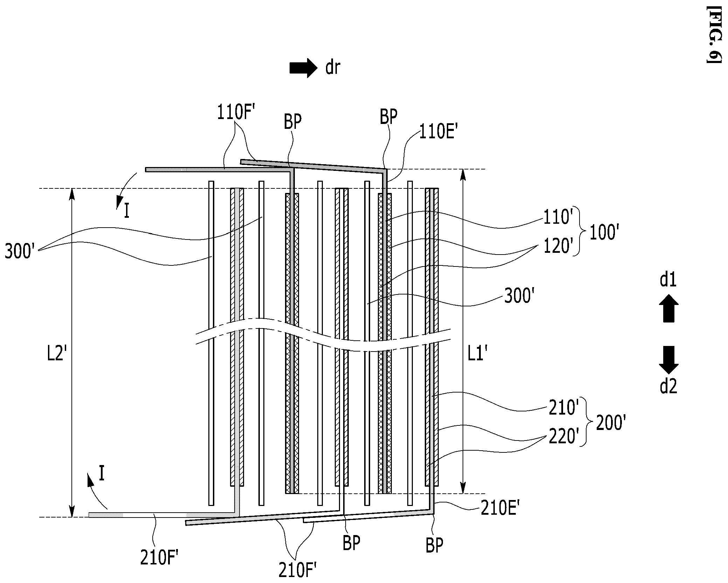

As the number of winding turns increases, the number of first exposed parts 110E stacked along the radial direction dr increases, and the first exposed parts 110E that are excessively stacked in a limited space may be irregularly deformed. Due to the irregular deformation of these first exposed parts 110E, the separator 300, etc. may be damaged, which may cause a short circuit between the first electrode 100 and the second electrode 200. This problem will be described again together with a comparative example of the present disclosure shown in FIG. 6.

FIG. 6 is a cross-sectional view showing a cross section of an electrode assembly according to a comparative example of the present disclosure.

Referring to FIG. 6, the electrode assembly according to the comparative example of the present disclosure may include first electrodes 100', second electrodes 200', and separators 300'. The first electrode 100' may include a first electrode current collector 110' and a first active material part 120', and the second electrode 200' may include a second electrode current collector 210' and a second active material part 220'. Also, the first exposed part 110E' to which an electrode active material is not applied in the first electrode current collector 110' may extend in a first direction d1, and the second exposed part 210E' to which the electrode active material is not applied in the second electrode current collector 210' may extend in a second direction d2 opposite to the first direction d1. Further, the first exposed part 110E' includes first segments 110F' described below, and the first segments 110F' have a bending point BP. Further, the second exposed part 210E' includes second segments 210F' described below, and the second segments 210F' have a bending point BP.

Unlike the electrode assembly of the present embodiment described above, in the case of the electrode assembly according to this comparative example, the length L1' from the end of the first electrode current collector 110' in the second direction d2 to the bending point BP of the first exposed part 110E' is constant for each winding turn along the radial direction dr of the jelly roll structure. That is, the height of the bending point BP of the first segment 110F' of the first exposed part 110E' is constant for each winding turn. When a plurality of first exposed parts 110E' are bent and stacked for each winding turn, some of the first exposed portions 110E' may show irregular deformation and become distorted if the height of the bending point BP of the first segment 110F' is constant as in this comparative example. In particular, the first segment 110F' portion close to the core part may not maintain a direction perpendicular to the axial direction and may be further bent in a direction indicated by "I". The first segments 110F' bent in an unexpected direction in this way may damage the separator 300', and due to the damaged separator 300', a short circuit may occur between the first electrode 100' and the second electrode 200'. Such a short circuit may ultimately lead to ignition or explosion of the secondary battery.

Referring again to FIG. 5, in the case of the electrode assembly 10 according to the present embodiment, in order to prevent the generation of such a short circuit, the length L1_{K-1}, L1_{K} from the end of the first electrode current collector 110 in the second direction d2 to the bending point BP of the first exposed part 110E may gradually increase for each winding turn along the radial direction dr of the jelly roll structure, as mentioned above. That is, the height of the bending point BP for each winding turn of the first exposed part 110E is designed to gradually increase as it goes in the radial direction dr. In the present embodiment, since the first exposed parts 110E for each winding turn are sequentially stacked to have a height difference for each winding turn, it is possible to prevent some of the first exposed parts 110E from showing irregular deformation and being distorted. Thereby, it is possible to minimize the generation of a short between the first electrode 100 and the second electrode 200 due to damage to the separator 300.

Meanwhile, according to the present embodiment, the first exposed part 110E may include a plurality of first segments 110F that are bent independently of each other, and the bending point BP of the first exposed part 110E described above may be a point at which the first segments 110F are bent. Specifically, the first exposed part 110E may not be formed in an integral shape, but may be provided with cut grooves of a predetermined depth along regular intervals. That is, the first exposed part 110E may be divided into the first segments 110F that are regions between these cut grooves. In the case where the first exposed part 110E is formed in an integral shape, if the first exposed part 110E is bent in the direction where the core part 10C is located, the first exposed part 110E may be irregularly wrinkled because the bending space is narrow. To prevent this problem, it is preferable to divide the first exposure part 110E into a plurality of first segments 110F and then bend these first segments 110F.

FIGS. 3 and 4 show a state in which a plurality of first segments 110F are bent, and overlapped in multiple layers, so that a flat surface region is formed in the first direction d1 of the electrode assembly 10. While bringing the current collecting plate described below into contact with the surface region of the electrode assembly 10, it is possible to guide the electrical connection of the electrode assembly 10. That is, the first exposed part 110E including the first segment 110F guides the electrical connection instead of an electrode tab, thereby realizing a tab-less structure. Compared to the conventional method using electrode tabs, the flat surface region formed by the plurality of the first segments 110F can realize a wider area for electrical connection, thereby increasing the energy density of the electrode assembly and reducing the resistance.

Next, the range of height difference of the bending point BP for each winding turn will be described.

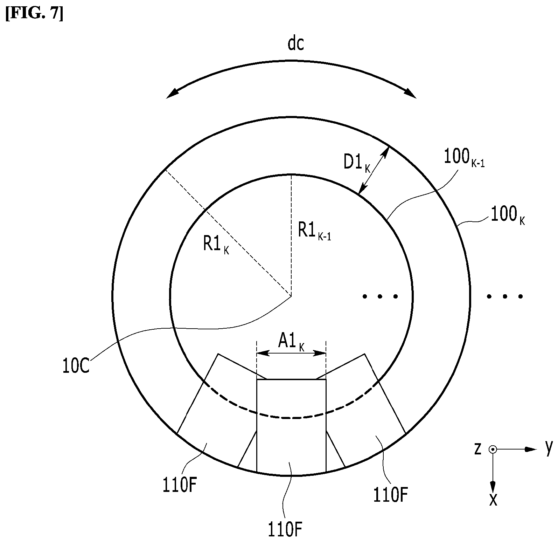

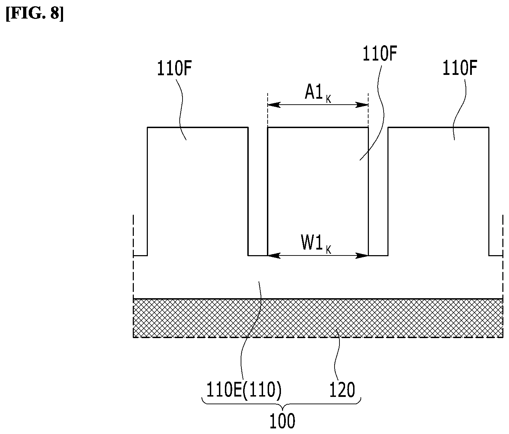

FIG. 7 is a schematic diagram showing a state where a first segment in a specific winding turn is placed on the previous winding turn in an electrode assembly according to an embodiment of the present disclosure. FIG. 8 is a partial diagram showing a part of a first electrode according to an embodiment of the present disclosure.

Referring to FIGS. 7 and 8 together with FIGS. 3 to 5, in the K^{th} winding turn (where K>2) of the jelly roll structure along the radial direction dr of the jelly roll structure, the length from the end of the first electrode current collector 110 in the second direction d2 to the bending point BP of the first exposed part 110E can be defined as L1_{K}. In this case, L1_{K}-L1_{K-1} can satisfy 50% or more and 300% or less of t1*(N1_{K}*A1_{K})/(2πR1_{K-1}). Here, the t1 is the thickness of the first segment 110F. The N1_{K} is the number of the first segments 110F along the circumferential direction dc at the K^{th} winding turn. The A1_{K} is the width of the first segment 110F of the K^{th} winding turn placed on the K-1ₜₕ winding turn. The R1_{K-1} is the radius at the K-1^{th} winding turn. In addition, K is the number of winding turns of the first electrode 100, and thus it is an integer exceeding 2.

Here, the circumferential direction dc corresponds to a direction surrounding the core part 10C, i.e., a circumferential direction, when the electrode assembly 10 is viewed from above. In other words, the circumferential direction dc may refer to a direction extending along the outer part 10U, which is the side surface of the cylindrical electrode assembly 10, when the electrode assembly 10 is viewed from above.

In addition, the number N1_{K} of the first segments 110F along the circumferential direction dc at the K^{th} winding turn means the number of the first segments 110F present in the part where the first electrode 100 is wound once at the K^{th} winding turn.

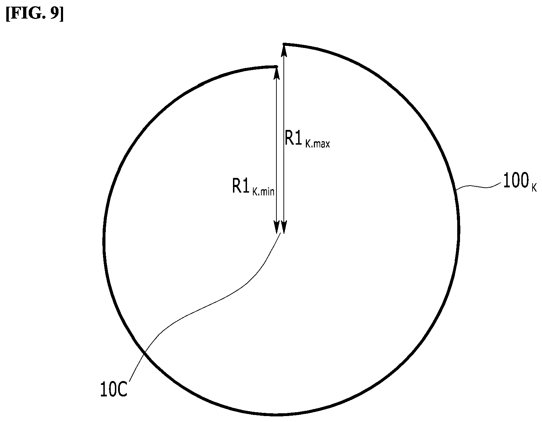

Meanwhile, the radius R1_{K} at the K^{th} winding turn will be described together with FIG. 9.

FIG. 9 is a schematic diagram showing only the first electrode in the K^{th} winding turn.

Although Fig. 7 depicts the shape of the first electrode 100_{K} of the K^{th} winding turn or the shape of the first electrode 100_{K-1} of the K-1^{th} winding turn as perfect circles, the first electrode 100K of the K^{th} winding turn may not be a perfect circle as shown in FIG. 9. At this time, in the present disclosure, the radius R1_{K} of the first electrode 100_{K} at the K^{th} winding turn may be defined as the median value of the shortest distance R1_{K.min} and the longest distance R1_{K.max} among the radial distances from the core part 10C to the part where the first electrode 100 is wound once at the K^{th} winding turn. Actually, since the thickness of the first electrode 100_{K} is considerably thin, the shape of the first electrode 100_{K} of the K^{th} winding turn is almost similar to the shape of a circle. Therefore, the radius R1_{K} of the first electrode 100_{K} at the K^{th} winding turn may be defined as above.

In this embodiment, L1_{K}-L1_{K-1} corresponds to the height difference between the bending points BP of the K-1^{th} winding turn and the K^{th} winding turn. At this time, the value of (N1_{K}*A1_{K})/(2πR1_{K-1}) is a value for calculating the degree to which the first segments 110F present in the K^{th} winding turn overlap on the first electrode 100 of the K-1^{th} winding turn, i.e., an overlapping ratio that the first segments 110F of the K^{th} winding turn have with respect to the K-1ₜₕ winding turn. In order to calculate this overlapping ratio, the first electrode 100_{K} of the K^{th} winding turn and the first electrode 100_{K-1} of the K-1ₜₕ winding turn are generalized and simply depicted as concentric circles in FIG. 7. Meanwhile, D1_{K} is the interval between the first electrode 100_{K} of the K^{th} winding turn and the first electrode 100_{K-1} of the K-1^{th} winding turn, and can be calculated as the difference between the radius R1_{K} at the K^{th} winding turn and the radius R1_{K-1} at the K-1^{th} winding turn.

Further, for the convenience of description, only three first segments 110F are illustrated among multiple first segments 110F present in the first electrode 100_{K} of the K^{th} winding turn. Multiple first segments 110F present in the first electrode 100_{K} of the K^{th} winding turn are bent toward the core part 10C, and the first segments 110F of the first electrode 100_{K} of the K^{th} winding turn are overlapped on the first electrode 100_{K-1} of the K-1^{th} winding turn. In the present disclosure, the overlapping ratio that the first segments 110F of the K^{th} winding turn have with respect to the K-1^{th} winding turn was calculated as the value of (N1_{K}*A1_{K})/(2πR1_{K-1}). Specifically, assuming that the first electrode 100_{K} of the K^{th} winding turn and the first electrode 100_{K-1} of the K-1^{th} winding turn are concentric circles, the value obtained by multiplying the width A1_{K} of the first segment 110F of the K^{th} winding turn placed on the K-1^{th} winding turn and the number N1_{K} of the first segments 110F of the K^{th} winding turn may be divided by the circumference value of the K-1^{th} winding turn, thereby obtaining the overlapping ratio.

By multiplying this overlapping ratio by the thickness t1 of the first segment 110F, the stacking thickness that the first segment 110F of the K^{th} winding turn has with respect to the K-1^{th} winding turn can be calculated. In this embodiment, the height difference between the bending points BP of the first segment 110F for each winding turn may be in the range of 50% or more and 300% or less of the stacking thickness calculated in this manner.

If the value of L1_{K}-L1_{K}-1 is less than 50% of t1*(N1_{K}*A1_{K})/(2πR1_{K-1}), the height difference between the bending points BP of the first segments 110F for each winding turn is slight, and therefore, when the first segments 110F are bent, it is not possible to prevent irregular deformation from occurring in some of the first segments 110F.

Further, if the value of L1_{K}-L1_{K-1} is more than 300% of t1*(N1_{K}*A1_{K})/(2πR1_{K-1}), the height difference between the bending points BP of the first segments 110F for each winding turn is excessive, and a lot of unnecessary space is generated in the height direction of the jelly roll electrode assembly 10. This reduces the capacity or energy density of the secondary battery, which is not appropriate.

Meanwhile, according to an embodiment of the present disclosure, the first segment 110F may have a square shape. As shown in FIG. 8, a part of the first electrode current collector 110 of the first electrode 100 is exposed to form a first exposed part 110E, and this first exposed part 110E may include a plurality of first segments 110F having a square shape that are disposed separately at regular intervals.

When the first segment 110F has a square shape, the A1_{K} can be calculated as W1_{K}, which is the width of the connecting end of the first segment 110F. Here, the connecting end of the first segment 110F is the part where the first segment 110F extends from the first exposed part 110E. In FIG. 8, the connecting end may correspond to the lower side when the first segment 110F is viewed as a virtual square shape. Since the width of the first segment 110F having a square shape is constant, the width A1_{K} of the first segment 110F of the K^{th} winding turn placed on the K-1^{th} winding turn is the same as the width W1_{K} of the connecting end of the first segment 110F. That is, when the first segment 110F has a square shape, the A1_{K} value can be taken as the W1_{K} value as it is.

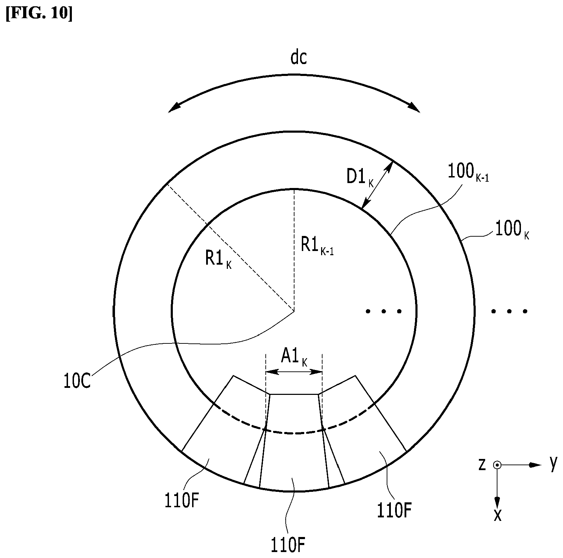

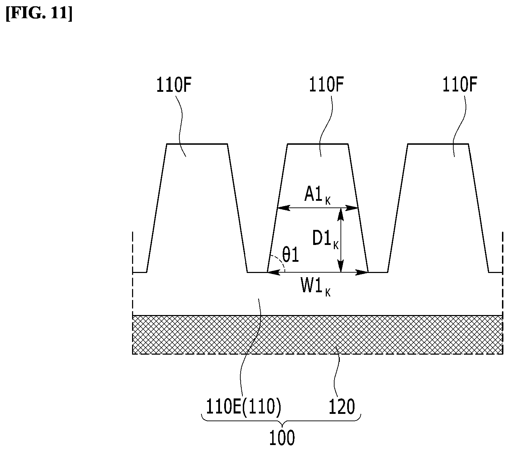

FIG. 10 is a schematic diagram showing a state where a segment in a specific winding turn is placed on the previous winding turn in an electrode assembly according to a modified embodiment of the present disclosure. FIG. 11 is a partial diagram showing a part of a first electrode according to a modified embodiment of the present disclosure.

Referring to FIGS. 10 and 11 together with FIGS. 3 to 5, as mentioned above, in the K^{th} winding turn (where K>2) of the jelly roll structure along the radial direction dr of the jelly roll structure, the length from the end of the first electrode current collector 110 in the second direction d2 to the bending point BP of the first exposed part 110E can be defined as L1_{K}. Further, L1_{K}-L1_{K-1} can satisfy 50% or more and 300% or less of t1*(N1_{K}*A1_{K})/(2πR1_{K-1}). Here, the t1 is the thickness of the first segment 110F. The N1_{K} is the number of the first segment 110F along the circumferential direction dc at the K^{th} winding turn. The A1_{K} is the width of the first segment 110F of the K^{th} winding turn placed on the K-1^{th} winding turn. The R1_{K-1} is the radius at the K-1^{th} winding turn. In addition, K is the number of winding turns of the first electrode 100, and therefore, is an integer exceeding 2. A detailed description thereof is omitted because it overlaps with the content described above.

According to a modified embodiment of the present disclosure, the first segment 110F may have a trapezoidal shape. In particular, the first segment 110F may have an equilateral trapezoidal shape. As shown in FIG. 11, a part of the first electrode current collector 110 of the first electrode 100 is exposed to form a first exposed part 110E, wherein the first exposed part 110E may include a plurality of trapezoidal first segments 110F that are disposed separately at regular intervals.

When the first segment 110F has an equilateral trapezoidal shape, the A1_{K} can be calculated as W1_{K}-2*(D1_{K}/tanθ1). The W1_{K} is the width of the connecting end of the first segment 110F. The connecting end of the first segment 110F is the part where the first segment 110F extends from the first exposed part 110E. The D1_{K} is the interval between the Kₜₕ winding turn and the K-1^{th} winding turn. Specifically, D1_{K} is the interval between the first electrode 100_{K} of the K^{th} winding turn and the first electrode 100_{K-1} of the K-1^{th} winding turn, and can be calculated as the difference between the radius R1_{K} at the K^{th} winding turn and the radius R1_{K-1} at the K-1^{th} winding turn. Further, the θ1 is the inner angle of the connecting end of the first segment 110F which has a trapezoidal shape.

The connecting end of the first segment 110F is a portion where the first segment 110F extends from the first exposed part 110E, and refers to a relatively long side when the first segment 110F is viewed as a virtual trapezoid. Further, the inner angle θ1 of the connecting end refers to the inner angle between the long side and both side sides when the first segment 110F is viewed as a virtual trapezoid. The inner angle θ1 of the connecting end is an acute angle in the trapezoidal structure. When the first segment 110F has a trapezoidal shape, the A1_{K} value should not be taken as the W1_{K} value as it is, and it is preferable that A1_{K} is calculated as W1_{K}-2*(D1_{K}/tanθ1).

Next, the structure of the second exposed part 210E of the second electrode 200 according to an embodiment of the present disclosure will be described in detail.

Referring again to FIG. 5, as mentioned above, the second exposed part 210E of the second electrode 200 may also have a bending point BP. In the case of the electrode assembly 10 according to the present embodiment, the length L2_{K-1}, L2_{K} from the end of the second electrode current collector 210 in the first direction d1 to the bending point BP of the second exposed part 210E may gradually increase for each winding turn along the radial direction dr of the jelly roll structure.

Since the second exposed part 210E has a bending point BP while being bent in the direction toward the core part 10C, the thickness of the portion where the second exposed part 210E is stacked, i.e., the stacking thickness, increases as it goes toward the core part 10C. Here, the direction toward the core part 10C corresponds to a direction opposite to the radial direction dr.

As the number of winding turns increases, the number of the second exposed parts 210E stacked along the radial direction dr increases, and the second exposed parts 210E that are stacked excessively in a limited space may be irregularly deformed. Due to the irregular deformation of these second exposed parts 210E, the separator 300, etc. may be damaged, which may cause a short circuit between the first electrode 100 and the second electrode 200.

Referring again to FIG. 6, in the case of the electrode assembly according to this comparative example, the length L2' from the end of the second electrode current collector 210' in the first direction d1 to the bending point BP of the second exposed part 210E' is constant for each winding turn along the radial direction dr of the jelly roll structure. That is, the height of the bending point BP of the second segment 210F' of the second exposed part 210E' is constant for each winding turn. In the case where a plurality of second exposed parts 210E' are bent and stacked for each winding turn, some of the second exposed parts 210E' may show irregular deformation and become distorted if the height of the bending point BP of the second segment 210F' is constant as in this comparative example. In particular, the second segment 210F' portion close to the core part may not maintain a direction perpendicular to the axial direction and may be further bent in the direction indicated by "I". The second segments 210F' bent in an unexpected direction in this way may damage the separator 300', and due to the damaged separator 300', a short circuit may occur between the first electrode 100' and the second electrode 200'. Such a short circuit may ultimately lead to ignition or explosion of the secondary battery.

Referring again to FIG. 5, in the case of the electrode assembly 10 according to the present embodiment, in order to prevent the generation of such a short circuit, the length L2_{K-1}, L2_{K} from the end of the second electrode current collector 210 in the first direction d1 to the bending point BP of the second exposed part 210E may gradually increases for each winding turn along the radial direction dr of the jelly roll structure, as mentioned above. That is, the height of the bending point BP for each winding turn of the second exposed part 210E along the second direction d2 was designed to gradually increase as it goes in the radial direction dr. In the present embodiment, since the second exposed parts 210E for each winding turn are sequentially stacked to have a height difference for each winding turn, it is possible to prevent some of the second exposed parts 210E from showing irregular deformation and being distorted. Thereby, it is possible to minimize the generation of a short between the first electrode 100 and the second electrode 200 due to damage to the separator 300.

Meanwhile, according to the present embodiment, the second exposed part 210E may include a plurality of second segments 210F that are bent independently of each other, and the bending point BP of the second exposed part 210E described above may be a point at which the second segments 210F are bent. Specifically, the second exposed part 210E may not be formed in an integral shape, but may be provided with cut grooves of a predetermined depth along regular intervals. That is, the second exposed part 210E may be divided into the second segments 210F that are regions between these cut grooves. In the case where the second exposed part 210E is formed in an integral shape, when the second exposed part 210E is bent in the direction where the core part 10C is located, the space being bent is narrow, so that the second exposed part 210E may be irregularly wrinkled. To prevent this problem, it is preferable to divide the second exposed part 210E into a plurality of second segments 210F and then bend these second segments 210F.

Although not specifically shown in the figure, while multiple second segments 210F are bent, and overlapped in multiple layers, a flat surface region can be formed in the second direction d2 of the electrode assembly 10. While bringing the current collector plate described below into contact with the surface area of the electrode assembly 10, it is possible to guide the electrical connection of the electrode assembly 10. That is, the second exposed part 210E including the second segment 210F guides the electrical connection instead of an electrode tab, thereby realizing a tab-less structure. Compared to the conventional method using electrode tabs, the flat surface region formed by the second segments 210F can realize a wider area for electrical connection, thereby increasing the energy density of the electrode assembly and reducing the resistance.

Next, the range of height difference of the bending point BP for each winding turn will be described.

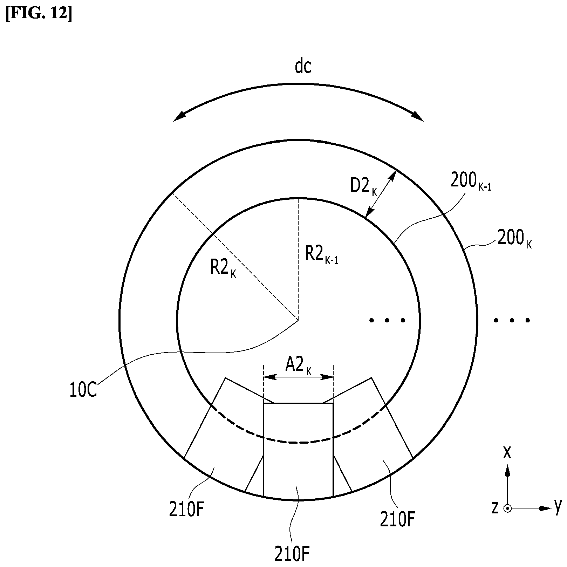

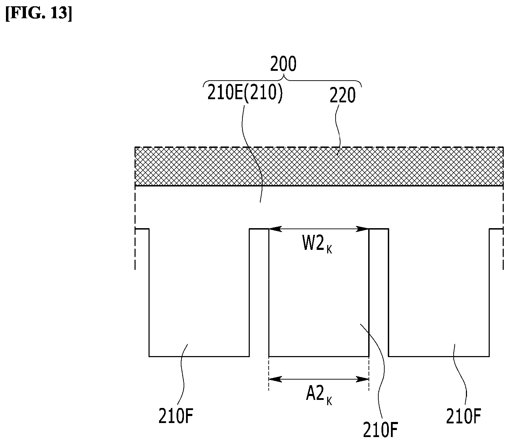

FIG. 12 is a schematic diagram showing a state where a second segment in a specific winding turn is placed on the previous winding turn in an electrode assembly according to an embodiment of the present disclosure. FIG. 13 is a partial diagram showing a part of a second electrode according to an embodiment of the present disclosure.

Referring to FIGS. 12 and 13 together with FIGS. 3 to 5, in the K^{th} winding turn (where K>2) of the jelly roll structure along the radial direction dr of the jelly roll structure, the length from the end of the second electrode current collector 210 in the first direction d1 to the bending point BP of the second exposed part 210E can be defined as L2_{K}. In this case, L2_{K}-L2_{K-1} can satisfy 50% or more and 300% or less of t2*(N2_{K}*A2_{K})/(2πR2_{K-1}). Here, the t2 is the thickness of the second segment 210F. The N2_{K} is the number of the second segments 210F along the circumferential direction dc at the K^{th} winding turn. The A2_{K} is the width of the second segment 210F of the K^{th} winding turn placed on the K-1ₜₕ winding turn. The R2_{K-1} is the radius at the K-1^{th} winding turn. In addition, K is the number of winding turns of the second electrode 200, and thus it is an integer exceeding 2.

Here, the circumferential direction dc corresponds to a direction surrounding the core part 10C, i.e., the circumferential direction, when the electrode assembly 10 is viewed from above. In other words, the circumferential direction dc may refer to the direction extending along the outer part 10U, which is the side surface of the cylindrical electrode assembly 10, when the electrode assembly 10 is viewed from above.

Further, the number N2_{K} of the second segments 210F along the circumferential direction dc at the K^{th} winding turn means the number of the second segments 210F present in the part where the second electrode 200 is wound once at the K^{th} winding turn.

Meanwhile, the radius R2_{K} at the K^{th} winding turn can be defined in the same manner as the radius R1_{K} of the first electrode 100_{K} at the K^{th} winding turn, as described above. Although not specifically shown in the figure, the radius R2_{K} at the Kₜₕ winding turn can be defined as the median value of the shortest distance and the longest distance among the radial distances from the core part 10C to the part where the second electrode 200 is wound once at the K^{th} winding turn.

In this embodiment, L2_{K}-L2_{K-1} corresponds to the height difference between the bending points BP of the K-1^{th} winding turn and the K^{th} winding turn. At this time, the value of (N2_{K}*A2_{K})/(2πR2_{K-1}) is a value for calculating the degree to which the second segments 210F present in the K^{th} winding turn overlap on the second electrode 200 of the K-1^{th} winding turn, i.e., the overlapping ratio that the second segments 210F of the K^{th} winding turn have with respect to the K-1^{th} winding turn. In order to calculate this overlapping ratio, the second electrode 200^{K} of the K^{th} winding turn and the second electrode 200_{K-1} of the K-1^{th} winding turn are generalized and simply depicted as concentric circles in FIG. 12. Meanwhile, D2_{K} is the interval between the second electrode 200_{K} of the K^{th} winding turn and the second electrode 200_{K-1} of the K-1^{th} winding turn, and can be calculated as the difference between the radius R2_{K} at the K^{th} winding turn and the radius R2_{K-1} at the K-1^{th} winding turn.

Further, for the convenience of description, only three second segments 210F are illustrated among multiple second segments 210F present in the second electrode 200_{K} of the K^{th} winding turn. Multiple second segments 210F present in the second electrode 200_{K} of the K^{th} winding turn are bent toward the core part 10C, and the second segments 210F of the second electrode 200_{K} of the K^{th} winding turn are overlapped on the second electrode 200_{K-1} of the K-1^{th} winding turn. In the present disclosure, the overlapping ratio that the second segments 210F of the K^{th} winding turn have with respect to the K-1^{th} winding turn was calculated as the value of (N2_{K}*A2_{K})/(2πR2_{K-1}). Specifically, assuming that the second electrode 200_{K} of the K^{th} winding turn and the second electrode 200_{K-1} of the K-1^{th} winding turn are concentric circles, the value obtained by multiplying the width A2_{K} of the second segment 210F of the K^{th} winding turn placed on the K-1^{th} winding turn and the number N1_{K} of the second segments 210F of the K^{th} winding turn may be divided by the circumference value of the K-1^{th} winding turn, thereby obtaining the overlapping ratio.

By multiplying this overlapping ratio by the thickness t2 of the second segment 210F, the stacking thickness that the second segment 210F of the K^{th} winding turn has with respect to the K-1^{th} winding turn can be calculated. In this embodiment, the height difference between the bending points BP of the second segment 210F for each winding turn may be in the range of 50% or more and 300% or less of the stacking thickness calculated in this manner.

If the value of L2_{K}-L2_{K}-1 is less than 50% of t2*(N2_{K}*A2_{K})/(2πR2_{K-1}), the height difference between the bending points BP of the second segments 210F for each winding turn is slight, and therefore, when the second segments 210F are bent, it is not possible to prevent irregular deformation from occurring in some of the second segments 210F.

Further, if the value of L2_{K}-L2_{K-1} is more than 300% of t2*(N2_{K}*A2_{K})/(2πR2_{K-1}), the height difference between the bending points BP of the second segments 210F for each winding turn is excessive, and a lot of unnecessary space is generated in the height direction of the jelly roll electrode assembly 10. This reduces the capacity or energy density of the secondary battery, which is not appropriate.

Meanwhile, according to an embodiment of the present disclosure, the second segment 210F may have a square shape. As shown in FIG. 13, a part of the second electrode current collector 210 of the second electrode 200 is exposed to form a second exposed part 210E, and this second exposed part 210E may include a plurality of second segments 210F having a square shape that are separately disposed at regular intervals.

When the second segment 210F has a square shape, the A2_{K} can be calculated as W2_{K}, which is the width of the connecting end of the second segment 210F. Here, the connecting end of the second segment 210F is the part where the second segment 210F extends from the second exposed part 210E. In FIG. 13, the connecting end may correspond to the upper side when the second segment 210F is viewed as a virtual square shape. Since the width of the second segment 210F having a square shape is constant, the width A2_{K} of the second segment 210F of the K^{th} winding turn placed on the K-1^{th} winding turn is the same as the width W2_{K} of the connecting end of the second segment 210F. That is, when the second segment 210F has a square shape, the A2_{K} value can be taken as the W2_{K} value as it is.

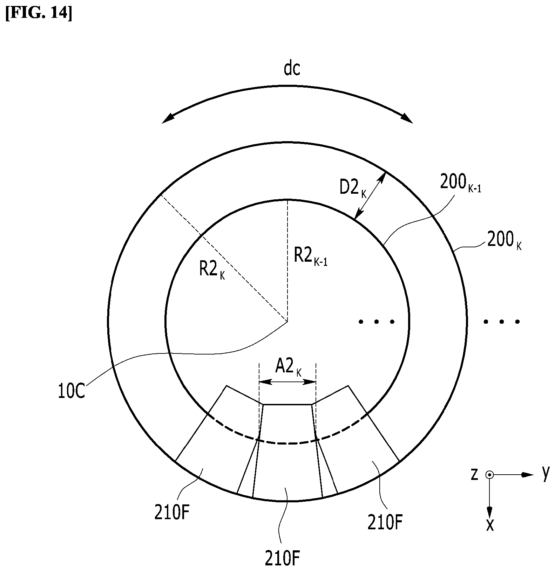

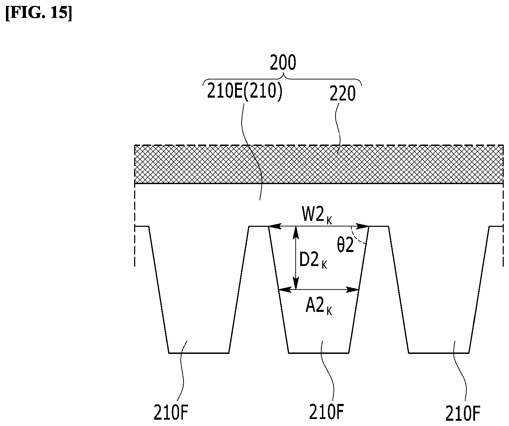

FIG. 14 is a schematic diagram showing a state where a segment in a specific winding turn is placed on the previous winding turn in an electrode assembly according to a modified embodiment of the present disclosure. FIG. 15 is a partial diagram showing a part of a second electrode according to a modified embodiment of the present disclosure.

Referring to FIGS. 14 and 15 together with FIGS. 3 to 5, as mentioned above, in the K^{th} winding turn (where K>2) of the jelly roll structure along the radial direction dr of the jelly roll structure, the length from the end of the second electrode current collector 210 in the first direction d1 to the bending point BP of the second exposed part 210E can be defined as L2_{K}. Further, L2_{K}-L2_{K-1} can satisfy 50% or more and 300% or less of t2*(N2_{K}*A2_{K})/(2πR2_{K-1}). Here, the t2 is the thickness of the second segment 210F. The N2_{K} is the number of the second segment 210F along the circumferential direction dc at the K^{th} winding turn. The A2_{K} is the width of the second segment 210F of the K^{th} winding turn placed on the K-1^{th} winding turn. The R2_{K-1} is the radius at the K-1^{th} winding turn. In addition, K is the number of winding turns of the second electrode 200, and therefore, is an integer exceeding 2. A detailed description thereof is omitted because it overlaps with the content described above.

According to a modified embodiment of the present disclosure, the second segment 210F may have a trapezoidal shape. In particular, the second segment 210F may have an equilateral trapezoidal shape. As shown in FIG. 15, a part of the second electrode current collector 210 of the second electrode 200 is exposed to form a second exposed part 210E, wherein the second exposed part 210E may include a plurality of trapezoidal second segments 210F that are disposed separately at regular intervals.

When the second segment 210F has an equilateral trapezoidal shape, the A2_{K} can be calculated as W2_{K}-2*(D2_{K}/tanθ2). The W2_{K} is the width of the connecting end of the second segment 210F. The connecting end of the second segment 210F is the part where the second segment 210F extends from the second exposed part 210E. The D1_{K} is the interval between the Kₜₕ winding turn and the K-1^{th} winding turn. Specifically, D2_{K} is the interval between the second electrode 200_{K} of the K^{th} winding turn and the second electrode 200_{K-1} of the K-1^{th} winding turn, and can be calculated as the difference between the radius R2_{K} at the K^{th} winding turn and the radius R2_{K-1} at the K-1^{th} winding turn. Further, the θ2 is the inner angle of the connecting end of the second segment 210F which has a trapezoidal shape.

The connecting end of the second segment 210F is a portion where the second segment 210F extends from the second exposed part 210E, and refers to a relatively long side when the second segment 210F is viewed as a virtual trapezoid. Further, the inner angle θ2 of the connecting end refers to the inner angle between the long side and both side sides when the second segment 210F is viewed as a virtual trapezoid. The inner angle θ2 of the connecting end is an acute angle in the trapezoidal structure. When the second segment 210F has a trapezoidal shape, the A2_{K} value should not be taken as the W2_{K} value as it is, and it is preferable that A2_{K} is calculated as W2_{K}-2*(D2_{K}/tanθ2).

Next, a secondary battery including the electrode assembly according to an embodiment of the present disclosure will be described in detail.

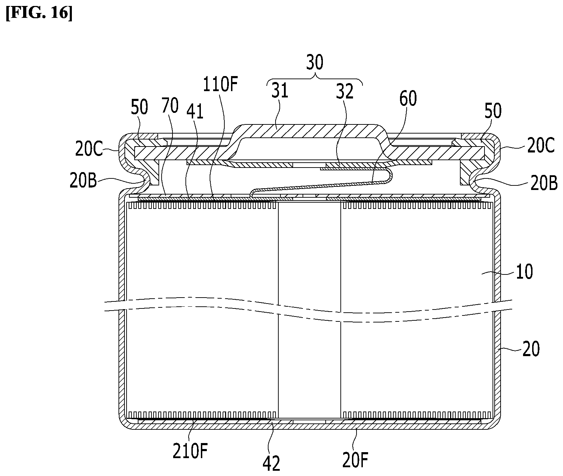

FIG. 16 is a cross-sectional view of a secondary battery including an electrode assembly according to an embodiment of the present disclosure.

Referring to FIGS. 3 and 16 together, the secondary battery according to an embodiment of the present disclosure includes an electrode assembly 10. In FIG. 16, the secondary battery according to the present embodiment is depicted as a cylindrical battery, but this is one example of the structure of the secondary battery of the present disclosure, and the secondary battery according to another embodiment of the present disclosure may be a prismatic battery.

The secondary battery according to the present embodiment may include a battery can 20 that houses the electrode assembly 10 and has an open upper part; and a cap assembly 30 coupled to the open upper part of the battery can 20. A gasket 50 may be interposed between the battery can 20 and the cap assembly 30.

The battery can 20 according to the present embodiment may be a cylindrical case with an open upper part, and may house an electrode assembly 10 and an electrolyte (not shown) in an internal housing space, and may include a metal material such as aluminum(Al).

The cap assembly 30 according to the present embodiment may include a top cap 31 having a plate shape and a connecting plate 32 electrically and mechanically connected to the top cap 31. The top cap 31 includes a metal material having electrical conductivity, and may cover the open upper part of the battery can 20. The top cap 31 may be electrically connected to the first segments 110F of the first exposed part 110E and, at the same time, be electrically insulated from the battery can 20 by a gasket 50. Therefore, the top cap 31 according to the present embodiment may function as an external terminal of the first electrode 100 of the secondary battery.

The electrical connection between the top cap 31 and the first segments 110F is specifically described. The secondary battery according to the present embodiment may further include a first collecting plate 41 that is located on the upper part of the electrode assembly 10. The first collecting plate 41 may include a conductive metal material such as aluminum, copper, steel, nickel, etc., and may be electrically connected to the first segments 110F of the electrode assembly 10. The electrical connection may be performed through weld-joining. One end of a lead 60 may be connected to the first collecting plate 41. The lead 60 may extend upward from the electrode assembly 10 and be connected to the connecting plate 32. In another embodiment, another end of the lead 60 may be directly connected to the lower surface of the top cap 31. The connection between the lead 60 and other components may be performed through welding. Further, the first collecting plate 41 may be formed integrally with the lead 60. In this case, the lead 60 may have a long plate shape extending outward from near the center of the first collecting plate 41.

The first collecting plate 41 may be provided with a plurality of projections and recesses (not shown) formed radially on its lower surface. When the radial projections and recesses are provided, the first collecting plate 41 may be pressed to press-fit the projections and recesses into the bent first segments 110F. The coupling between the first collecting plate 41 and the first segments 110F may be performed by laser welding, by way of example. Laser welding may be performed by partially melting the base material of the first collecting plate 41. In a modified example, the welding between the first collecting plate 41 and the first segments 110F may be performed in a state where a solder is interposed. In this case, the solder may have a lower melting point compared to the first collecting plate 41 and the first segments 110F. Laser welding can be replaced by resistance welding, ultrasonic welding, spot welding, etc.

Meanwhile, the secondary battery according to the present embodiment may further include a second collecting plate 42 that is located at a lower part of the electrode assembly 10. Specifically, the second collecting plate 42 may be located between the electrode assembly 10 and the bottom part 20F of the battery can 20. The second collecting plate 42 may include a conductive metal material such as aluminum, copper, steel, nickel, etc., and may be electrically connected to the second segments 210F of the electrode assembly 10. One side of the second collecting plate 42 may be coupled to the second segments 210F, and the opposite side of the second collecting plate 42 may be coupled to the bottom part 20F of the battery can 20. Weld-joining may be applied to couple the second collecting plate 42. Thereby, the battery can 20 according to the present embodiment can function as an external terminal of the second electrode 200 of the secondary battery.

Meanwhile, the secondary battery according to the present embodiment may include an insulating plate 70.

The insulating plate 70 may cover the first collecting plate 41. The insulating plate 70 may cover the first collecting plate 41 on the upper surface of the first collecting plate 41, thereby preventing contact between the first collecting plate 41 and the battery can 20, particularly the beading part 20B of the battery can 20 described later. Further, the insulating plate 70 may be provided with a separate lead hole so that a lead 60 extending upward from the first collecting plate 41 may be pulled out. The lead 60 may be pulled out upward through the lead hole of the insulating plate 70 and coupled to the lower surface of the connecting plate 32 or the lower surface of the top cap 31.

The region around the edges of the insulating plate 70 can be interposed between the first collecting plate 41 and the beading part 20B of the battery can 20, thereby fixing the coupling body of the electrode assembly 10 and the first collecting plate 41. Thereby, the coupling body of the electrode assembly 10 and the first collecting plate 41 can limit the axial movement of the electrode assembly 10, thereby improving the assembly stability of the secondary battery. The insulating plate 70 can be made of an insulating polymer resin. In one example, the insulating plate 70 can include one or more materials selected from the group consisting of polyethylene, polypropylene, polyimide, or polybutylene terephthalate.

Meanwhile, the battery can 20 according to the present embodiment can include a crimping part 20C and a beading part 20B.

The crimping part 20C is a portion of the battery can 20 that wraps around the cap assembly 30 and the gasket 50. Specifically, the battery can 20 and the cap assembly 30 can be crimped and coupled with the gasket 50 interposed therebetween. That is, crimp coupling may be applied for coupling between the battery can 20 and the cap assembly 30. Thereby, a crimping part 20C may be formed in the battery can 20. More specifically, the gasket 50 is located between the battery can 20 and the cap assembly 30, and then an upper end of the battery can 20 is bent in the direction where the cap assembly 30 is located, thereby achieving the crimp coupling.

The beading part 20B refers to a portion in which a part of the battery can 20 is curved in a central direction in a region higher than the electrode assembly 10 among the side parts of the battery can 20, and is intended to stably position the cap assembly 30 and prevent the electrode assembly 10 from moving. That is, the cap assembly 30 according to the present embodiment and the gasket 50 surrounding it can be seated on the beading part 20B of the battery can 20. The above-mentioned crimp coupling may be performed in a state where the cap assembly 30 and the gasket 50 surrounding it are seated on the beading part 20B.

The gasket 50 according to the present embodiment can be located between the battery can 20 and the cap assembly 30 to enhance the sealing performance of the secondary battery. Further, the gasket 50 may include an electrically insulating material, and block the occurrence of a short circuit between the battery can 20 functioning as a terminal of the second electrode 200, and the cap assembly 30 functioning as a terminal of the first electrode 100. The gasket 50 may include at least one material selected from the group consisting of polypropylene(PP), polyethylene terephthalate(PET), polybutylene terephthalate(PBT), and perfluoroalkoxy alkane(PFA).

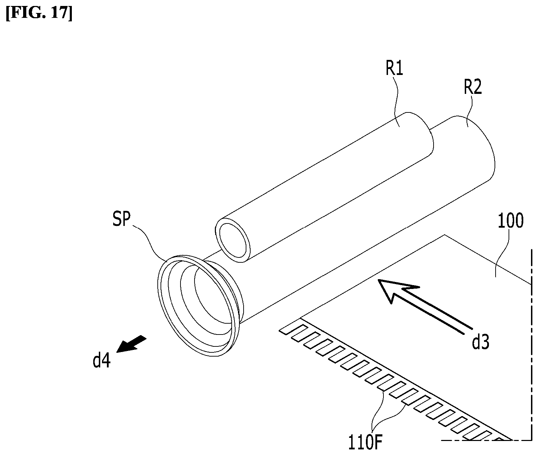

FIG. 17 is a diagram for explaining a method of bending a first segment of a first electrode according to an embodiment of the present disclosure.

Referring to FIGS. 5 and 17, in order to form a flat surface region in the first direction d1 of the electrode assembly 10, the first segments 110F of the first electrode 100 are bent toward the core part as described above. However, the first segments 110F are not bent at one time. First, the first segments 110F can be bent slightly to primarily have a fixed slope. Subsequently, after the first electrode 100 is wound, strong pressure may be applied to the slightly bent first segments 110F to completely bend the first segments 110F, as shown in FIGS. 3 and 5.

In this case, in order to slightly bend the first segments 110F to primarily have a fixed slope, rolls R1 and R2 provided with a slope part SP can be used as shown in FIG. 17. Specifically, the first electrode 100 provided with the first segments 110F can be inserted between the two rolls R1 and R2 along the d3 direction. In this case, a slope part SP having a fixed slope can be provided at the point at which the first segments 110F are inserted among the two rolls R1 and R2, and the slope part SP can have a truncated cone shape. The inserted first segments 110F are bent by the slope part SP, and the point where the first segments 110F are bent by the slope part SP corresponds to the bending point BP. While the first electrode 100 is inserted, the roll R2 having the slope part SP can gradually move in the d4 direction. That is, the roll R2 having the slope part SP can gradually move along the direction in which the first segments 110F protrude from the first electrode 100. As the roll R2 having the slope part SP gradually moves in this manner, the height of the bending point BP for each winding turn of the first electrode 100 along the first direction d1 can be designed to gradually increase.

Although not specifically shown in the figure, the height of the bending point BP of the second segments 210F of the second electrode 200 for each winding turn can also be adjusted in the same manner as in the first electrode 100.

In the embodiments above, expressions indicating directions such as "front," "rear," "left," "right," "up," and "down" have been used. These expressions are used only to facilitate the description, and may vary, for example, depending on the location of a target object or an observer.

A plurality of secondary batteries according to an embodiment of the present disclosure described above may be mounted together with various control and protection systems such as a battery management system (BMS), a battery disconnect unit (BDU), and a cooling system, to form a battery pack.

The secondary battery, the battery module or the battery pack may be applied to various devices, which include, for example, transportation vehicles such as electric bicycles, electric vehicles, and hybrids, and energy storage systems (ESS). However, without being limited thereto, they may be applied to various devices using secondary batteries.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

10: electrode assembly
100: first electrode
110: first electrode current collector
110E: first exposed part
110F: first segment
120: first active material part
200: second electrode
210: second electrode current collector
210E: second exposed part
210F: second segment
220: second active material part
300: separator

## Claims

1. An electrode assembly comprising:
a first electrode;
a second electrode; and
a separator interposed between the first electrode and the second electrode, wherein:
the first electrode, the second electrode, and the separator are wound together to form a jelly roll structure,
the first electrode includes a first electrode current collector and a first active material part formed by applying an electrode active material to one side or both sides of the first electrode current collector,
the second electrode includes a second electrode current collector and a second active material part formed by applying an electrode active material to one side or both sides of the second electrode current collector,
a first exposed part to which the electrode active material is not applied in the first electrode current collector extends in a first direction,
a second exposed part to which the electrode active material is not applied in the second electrode current collector extends in a second direction opposite to the first direction,
the first exposed part and the second exposed part have a bending point for each winding turn,
the length from the end of the first electrode current collector in the second direction to the bending point of the first exposed part gradually increases for each winding turn along a radial direction of the jelly roll structure, and
the radial direction is a direction directed from a core part to an outer part of the jelly roll structure.

2. The electrode assembly according to claim 1,
wherein the first exposed part includes a plurality of first segments that are bent independently of one another, and
the bending point of the first exposed part is a point at which the first segment is bent.

3. The electrode assembly according to claim 2,
wherein in the K^{th} winding turn (where K>2) of the jelly roll structure along the radial direction of the jelly roll structure, when the length from the end of the first electrode current collector in the second direction to the bending point of the first exposed part is defined as L1_{K},
L1_{K}-L1_{K-1} satisfies 50% or more and 300% or less of t1*(N1_{K}*A1_{K})/(2πR1_{K-1}), wherein:
the t1 is the thickness of the first segment,
the N1_{K} is the number of the first segments along the circumferential direction at the K^{th} winding turn,
the A1_{K} is the width of the first segment of the K^{th} winding turn placed on a K-1^{th} winding turn, and
the R1_{K-1} is the radius at the K-1ₜₕ winding turn.

4. The electrode assembly according to claim 3,
wherein the first segment has a square shape.

5. The electrode assembly according to claim 4,
wherein the A1_{K} is calculated as W1_{K}, which is the width of the connecting end of the first segment.

6. The electrode assembly according to claim 3,
wherein the first segment has a trapezoidal shape.

7. The electrode assembly according to claim 6,
wherein the A1_{K} is calculated as W1_{K}-2*(D1_{K}/tanθ1),
the W1_{K} is the width of the connecting end of the first segment,
the D1_{K} is the interval between the K^{th} winding turn and the K-1^{th} winding turn,
and
the θ1 is the inner angle of the connecting end of the first segment having the trapezoidal shape.

8. The electrode assembly according to claim 1,
wherein the length from the end of the second electrode current collector in the first direction to the bending point of the second exposed part gradually increases for each winding turn along the radial direction of the jelly roll structure.

9. The electrode assembly according to claim 8, wherein:
the second exposed part includes a plurality of second segments that are bent independently of one another, and
the bending point of the second exposed part is a point at which the second segment is bent.

10. The electrode assembly according to claim 9, wherein:
in the K^{th} winding turn (where K>2) of the jelly roll structure along the radial direction of the jelly roll structure, when the length from the end of the second electrode current collector in the first direction to the bending point of the second exposed part is defined as L2_{K},
L2_{K}-L2_{K-1} satisfies 50% or more and 300% or less of t2*(N2_{K}*A2_{K})/(2πR2_{K-1}),
the t2 is the thickness of the second segment,
the N2_{K} is the number of the second segments along the circumferential direction at the K^{th} winding turn,
the A2_{K} is the width of the second segment of the K^{th} winding turn placed on the K-1^{th} winding turn, and
the R2_{K-1} is the radius at the K-1^{th} winding turn.

11. The electrode assembly according to claim 10,
wherein the second segment has a square shape.

12. The electrode assembly according to claim 11,
wherein the A2_{K} is calculated as W2_{K}, which is the width of the connecting end of the second segment.

13. The electrode assembly according to claim 10,
wherein the second segment has a trapezoidal shape.

14. The electrode assembly according to claim 13,
wherein the A2_{K} is calculated as W2_{K}-2*(D2_{K}/tanθ2),
the W2_{K} is the width of the connecting end of the second segment,
the D2_{K} is the interval between the K^{th} winding turn and the K-1^{th} winding turn,
and
the 02 is the inner angle of the connecting end of the second segment having a trapezoidal shape.

15. A secondary battery comprising the electrode assembly according to claim 1.
